# EUROPEAN PATENT APPLICATION

(11) **EP 3 734 980 A1**
(43) Date of publication of application: **04.11.2020**
(21) Application number: 18897218.6
(22) Date of filing: 06.12.2018
(51) Int. Cl.: H04N 21/434

(54) **VIDEO PLAYBACK METHOD AND TERMINAL, SERVER AND STORAGE MEDIUM**

(30) Priority: 29.12.2017 CN 201711482043
(71) Applicant: ZTE Corporation, Shenzhen, Guangdong 518057 (CN)
(72) Inventor: WANG, Kui, Shenzhen, Guangdong 518057 (CN); CHEN, Yingchuan, Shenzhen, Guangdong 518057 (CN); BAI, Yaxian, Shenzhen, Guangdong 518057 (CN)
(74) Representative: Petraz, Gilberto Luigi
(86) International application number: PCT/CN2018/119434
(87) International publication number: WO 2019/128667

(57) **Abstract**

Disclosed is a video playback method which, when applied to a terminal, includes: when playing back a target video, receiving index information that is sent by a server and corresponds to the target video; when playing back a first video frame of the current time period, determining, according to the index information, a download address of a second video frame that matches with a first time period; and downloading the second video frame at a first time according to the download address. When applied to a server, the method includes: acquiring focal point description information of a target video; encapsulating the focal point description information into index information of the target video; and sending the index information to a terminal.

## Description

### Cross-reference to Related Applications

This application claims the priority of Chinese patent application CN201711482043.8 filed with the Patent Office of the People's Republic of China on December 29, 2017, the entirety of which is incorporated herein by reference.

### Field of the Invention

The present application relates to the field of virtual reality technology, for example, to a video playback method, a terminal, a server and a storage medium.

### Background of the Invention

Virtual reality (VR) technology, also known as artificial environment, is a computer simulation technology with which a virtual world can created and experienced. That is to say, a three-dimensional virtual environment is generated by computer simulation to provide users with visual, auditory and tactile sensory simulations, thereby providing users with an immersive experience.

In related technologies, VR terminals need huge storage space and decoding capabilities when playing back VR videos. In order to reduce requirements for storage space and decoding capabilities of a VR terminal, the VR terminal first detects a users' central vision region, then downloads a corresponding high-definition video slice from a server and decodes and displays the corresponding high-definition video slice in the central vision region; at the same time, the VR terminal downloads corresponding low-definition video slices from the server, decodes and displays the corresponding low-definition video slices in peripheral vision regions other than the central vision region. When the VR terminal detects a change in users' central vision region, it needs to re-download a corresponding high-definition video slice, and after the download is performed to a certain extent (for example, the download is completed), the VR terminal decodes and displays the corresponding high-definition video slice in a changed central vision region; at the same time, the VR terminal needs to download corresponding low-definition video slices again, and after the download is performed to a certain extent, the VR terminal decodes and displays the corresponding low-definition video slices in changed peripheral vision regions.

However, the VR terminal can display matching video slices after a period of time after detecting the change in user's visual center (namely, the time period corresponding to the duration within which the video slices are downloaded from a server to a certain degree), which results in a certain latency at the VR terminal when playing back a VR video. That is to say, related VR terminals have video playback functions of poor intelligence.

### Summary of the Invention

In order to solve the above technical problem, the present application aims to provide a video playback method, a terminal, a server and a storage medium, which can reduce latency at a terminal when the terminal plays back a video, thereby improving intelligence of a video playback function of the terminal.

An embodiment of the present application provides a video playback method, which is applied to a terminal. The method includes: when playing back a target video, receiving index information that is sent from a server and that corresponds to the target video; when playing back a first video frame of the current time period, determining, according to the index information, a download address of a second video frame that matches with a first time period, wherein the first video frame and the second video frame are video frames in the target video, and the first time period is a next time period of the current time period; downloading the second video frame at a first time according to the download address, wherein the first time is a preset time within the current time period; and playing back the second video frame at the start time of the first time period.

An embodiment of the present application provides a terminal, including a first processor, a first storage medium, a first communication bus, and a player. The first processor, the first storage medium, and the player are connected through the first communication bus. The first processor is configured to call a video playback-related program stored in the first storage medium and perform following steps: when playing back a target video, receiving index information that is sent from a server and that corresponds to the target video; when playing back a first video frame of the current time period, determining, according to the index information, a download address of a second video frame that matches with a first time period, wherein the first video frame and the second video frame are video frames in the target video, and the first time period is a next time period of the current time period; and downloading the second video frame at a first time according to the download address, wherein the first time is a preset time within the current time period. The player is configured to play back the second video frame at the start time of the first time period.

An embodiment of the present application provides a server, including a second processor, and a second storage medium having stored thereon instructions executable by the second processor. The second storage medium depends on the second processor to perform operations through a second communication bus. The instructions, when executed by the second processor, perform following steps: acquiring focal point description information of a target video; encapsulating the focal point description information into index information of the target video; and sending the index information to the terminal.

An embodiment of the present application provides a computer storage medium, which is applied to a terminal. The computer storage medium has stored thereon one or more video playback-related programs, the one or more video playback-related programs being executable by one or more first processors to implement the video playback method.

An embodiment of the present application provides a computer storage medium, which is applied to a server. The computer storage medium has stored thereon one or more video playback-related programs, the one or more video playback-related programs being executable by one or more second processors to implement the video playback method.

### Brief Description of the Drawings

Fig. 1 is a schematic diagram of division of a spherical space of a panoramic video provided by an embodiment of the present application;
Fig. 2 is a schematic diagram of a spherical projection of a panoramic video provided by an embodiment of the present application;
Fig. 3 is a schematic diagram of tiles of a panoramic video provided by an embodiment of the present application;
Fig. 4 is a first schematic diagram of a structure of a video playback system provided by an embodiment of the present application;
Fig. 5 is a first flowchart of a video playback method provided by an embodiment of the present application;
Fig. 6 is a schematic diagram of positional relationship between first, second and third target video slices provided by an embodiment of the present application;
Fig. 7 is a schematic diagram of video playback times provided by an embodiment of the present application;
Fig. 8 is a second flowchart of a video playback method provided by an embodiment of the present application;
Fig. 9 is a second schematic diagram of a structure of a video playback system provided by an embodiment of the present application;
Fig. 10 is a third schematic diagram of a structure of a video playback system provided by an embodiment of the present application;
Fig. 11 is a schematic diagram of a structure of a terminal provided by an embodiment of the present application; and
Fig. 12 is a schematic diagram of a structure of a server provided by an embodiment of the present application.

### Detailed Description of the Embodiments

The technical solutions in embodiments of the present application will be described clearly and completely in conjunction with drawings in the embodiments of the present application.

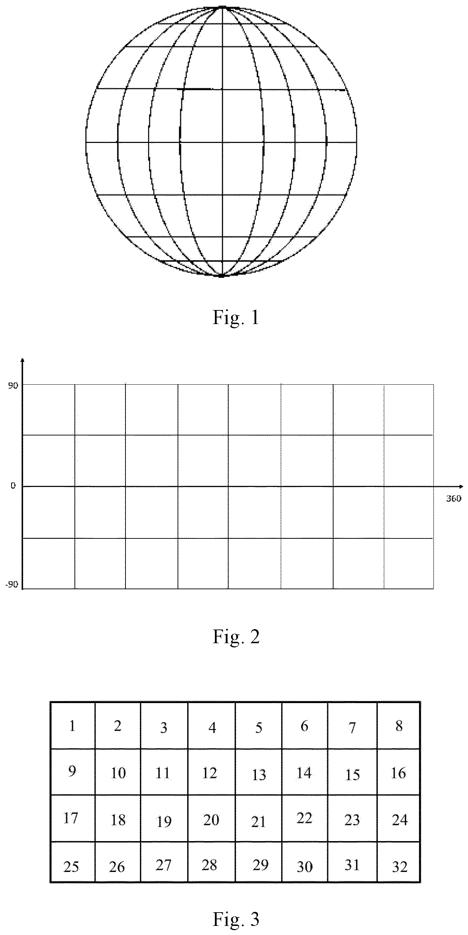

It should be noted that videos involved in the application may refer to VR videos. VR videos will be introduced as follows. A VR video is a 360-degree panoramic video, which is a spherical video space, as shown in Fig. 1. Here, for the convenience of description, an original spherical video space is projected as a rectangle, a longitude of the spherical space of panoramic video being projected along a horizontal direction (0-360) of the rectangle, and a latitude thereof being projected along a vertical direction (±90) of the rectangle, for example, as shown in Fig. 2.

It is assumed that a panoramic video includes videos captured by thirty-two cameras (the specific number of cameras is determined according actual situations), and corresponds to thirty-two perspectives, each perspective corresponding to a video slice. In order to transmit video slices with different definitions in different regions, a projected rectangular video region is divided into thirty-two tiles in a grid shape, for example, as shown in Fig. 3. It should be noted that when users' visual centers fall on a certain region, it means that a focus value corresponding to that region is a maximum focus value.

A terminal in an embodiment of the present application may be an electronic device with a video playback function, for example, a mobile terminal such as a mobile phone, a tablet computer, a notebook computer, a handheld computer, personal digital assistant (PDA), a portable media player (PMP), a video playback apparatus and a wearable device, and a fixed terminal such as a digital television (TV) and a desktop computer.

### Embodiment one

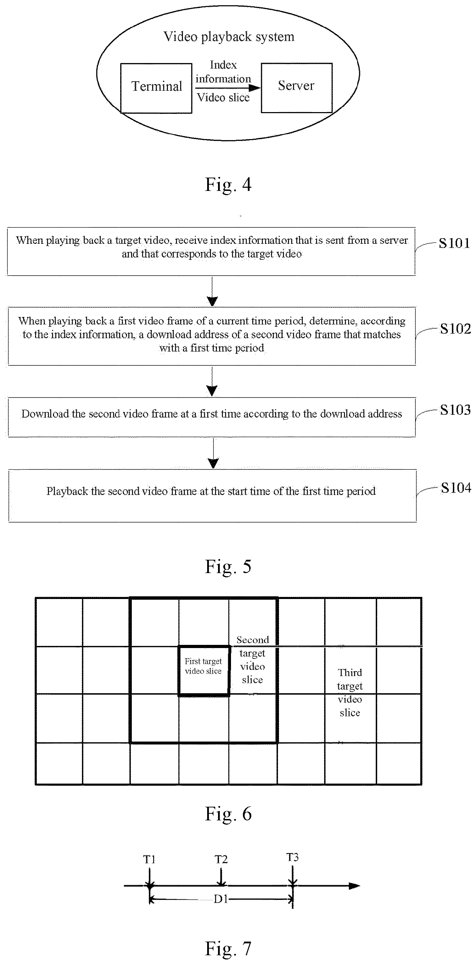

An embodiment of the present application provides a video playback method, which is implemented based on a video playback system. An embodiment of the present application provides a video playback system. As shown in Fig. 4, the system includes a terminal and a server. The server is configured to generate index information and send the index information to the terminal, and to download corresponding video frame data upon reception of a download request sent by the terminal. The terminal is configured to receive the index information, and is configured, when playing back a video frame of the current time period, to download, in advance from the server according to the index information, a video frame that matches with a next time period of the current time period. Thus, the video playback system provided by the present application can improve intelligence of a video playback function of the terminal.

An embodiment of the present application provides a video playback method, which is applied to a terminal. As shown in Fig. 5, the method may include step S101, step S102, step S103, and step S104.

In step S101, when playing back a target video, index information that is sent by a server and corresponds to the target video is received.

Here, in an embodiment of the present application, the terminal is a terminal having a function of playing back a video according to a playback instruction. Therefore, an application scenario of the embodiments of the present application is a scenario where it needs to play back the video when a user is to watch a video.

In an implementation, when the terminal plays back the target video, the terminal first sends a request instruction to the server, the request instruction including information about the target video, such as the identifier of the target video. Upon reception of the request instruction from the terminal, the server returns index information to the terminal.

In an embodiment, the above target video refers to a video to be played back by the terminal, and is obtained by receiving a playback instruction sent by the user and parsing the playback instruction. In an embodiment, a parsed playback instruction includes a field for characterizing video information; a video that matches with the video information in a server is searched for according to a field of video information.

In an embodiment, the above index information is used for characterizing description information of respective sliced videos corresponding to respective video frames in the target video. The index information includes time period identifiers, tile identifiers (or perspectives of tiles), region coordinates, and focus values acquired in different ways.

A time period identifier may refer to a time period during which a focus value does not change.

A tile identifier (or perspective of a sliced video) may refer to a label of the sliced video in an entire video frame, for example, Tile 32 in Fig. 3.

Region coordinates may refer to coordinate values in a coordinate system with a fixed point in an entire video frame as the origin, such as coordinates of the left, right, top and bottom edges of the sliced video being represented by p left, p right, p_top, and p_bottom, respectively.

A focus value may refer to a value describing the degree of the user's focus on a video slice. The larger the value is, the closer the region corresponding to the video slice is to the user's visual center. The present application provides two ways for acquiring focus values: in one way, the focus values are acquired by performing statistical analysis on historical data; in the other way, the focus values are acquired based on preset focal point description information.

In an embodiment, the index information is included in a relevant attribute field of the standard HTTP live streaming (HLS) protocol, or the video streaming technology for transmitting dynamic code rates on the Internet (Dynamic Adaptive Streaming over HTTP ((DASH) protocol). In an embodiment, when the index information is included in the HLS protocol, the attribute field corresponding to the index information is the EXT-X-VIEW-INF attribute field in the HLS protocol. When the index information is included in the DASH protocol, the attribute field corresponding to the index information is the ViewInfo attribute field in the DASH protocol.

In an embodiment, based on the foregoing, the above index information may be represented in the form shown in Table 1 below.

**Table 1**

| EXT-X-VIEW-INF/ViewInfo Attribute | Meaning |
|---|---|
| PERIOD_ ID | Time period identifier |
| TILE_ID | Tile identifier or perspective |
| POSITION | Region coordinates, including p_top, POSITION p_bottom, p_left, and p_right |
| FOCUS_STAT/FOCUS_DCT | Focus values corresponding to first/second ways |

In an embodiment, the index information in Table 1 above may be represented as the following program:

```
#EXTM3U
         #EXT-X-VERSION:3
         #EXT-X-TARGETDURATION:10
         #EXT-X-VIEW-INF:VIEWSOURSE_ID-0,PERIOD_ID-114,TILE_TD=1,POS
    ITION="90,45,0,45",FOCUS_STAT="1",FOCUS_DCT="1"
         #EXTINF:10.000,
         a-f3-1.ts
    #EXT-X-VIEW-INF:VIEWSOURSE_ID=0,PERIOD_ID=114,TILE_ID=2,POSITIO
    N="90,45,45,90",FOCUS_STAT="2",FOCUS_DCT="1"
         #EXTINF:10.000,
         b-f3-1.ts
         #EXT-X-VIEW-INF:VIEWSOURSE_ID=0,PERIOD_ID=114,TILE_ID=3,POS
    ITION="90,45,90,135",FOCUS_STAT="2",FOCUS_DCT="2"
         #EXTINF:10.000,
         c-f3-1.ts ... ...
         #EXT-X-VIEW-INF:VIEWSOURSE_ID=0,PERIOD_ID=114,TILE_ID=11,PO
    SITION="45,0,90,135",FOCUS_STAT="3",FOCUS_DCT="2"
         #EXTINF:10.000,
         a-f3-N.ts
         #EXT-X-VIEW-INF:VIEWSOURSE_ID=0,PERIOD_ID=114,TILE_ID=12,PO
    SITION="45,0,135,180",FOCUS_STAT="2",FOCUS_DCT="3"
         #EXTINF:10.000,
         b-f3-N.ts
         #EXT-X-VIEW-INF:VIEWSOURSE_ID=0,PERIOD_ID=229,TILE_ID=1,POS
    ITION="90,45,0,45",FOCUS_STAT="1",FOCUS_DCT="1"
         #EXTINF:10.000,
         c-f3-N.ts
         #EXT-X-ENDLIST
```

In an embodiment, at the start time of playback the target video, when playing back a first video frame of the target video, there is no possibility that the first video frame is downloaded in advance. Therefore, a definition level of the first video frame may be set in advance. For example, at the start time of playback, a first video frame corresponding to a definition of the highest level, a definition of the next highest level or a definition of the lowest level is downloaded. In order to ensure the fluency of playback of the target video, in an embodiment, the definition level of the first video frame is set to the definition of the lowest level in advance (namely, a method of playing back a first video frame in the existing technologies). At the start time of playback of the target video, an address of the first video frame corresponding to the definition of the lowest level may be determined according to index information (the index information includes download addresses of respective video frames with different definitions in the target video), and finally, the first video frame is downloaded according to the address.

In an embodiment, when the terminal does not receive index information sent by the server (corresponding to the case where the server does not generate index information, for example, the target video has just been released and there is no historical data), the terminal plays back the target video according to a relevant video playback method, namely, the terminal plays back the first video frame of the current time period, but a second video frame is not downloaded until the start time of a first time period. In order to solve the problem of latency at the terminal in this case, a download speed of the second video frame can be increased at the start time of the first time period.

In step S102, when playing back the first video frame of the current time, a download address of a second video frame that matches with a first time period is determined according to the index information.

The first video frame and the second video frame are video frames in the target video, and the first time period is a next time period of the current time period.

In the current time period, the terminal needs to download the second video frame of the first time period in advance while playing back the first video frame, so as to alleviate the problem of latency at the terminal when the terminal plays back a video. In order to download the second video frame of the first time period timely, it is necessary to, first, learn the download address of the second video frame.

In an example, the above index information may be download addresses of respective sliced videos in respective video frames in the target video, a download address corresponding to a video slice of a definition. Based on this, step S102 may be implemented by: searching, from the index information, for index information of the second video frame corresponding to the first time period; and searching, from the index information of the second video frame, for download addresses of the respective video slices in the second video frame.

In another example, the above index information includes focus values of respective video slices in respective video frames in the target video, definitions corresponding to different focus values, and download addresses of video slices corresponding to different definitions.

In an embodiment, when the index information includes download addresses of video slices corresponding to different definitions, the index information may be represented as the following program:

```
         #EXTM3U
         #EXT-X-VERSION:3
         #EXT-X-STREAM-INF:PROGRAM-ID=1,BANDWIDTH=863459,RESOLUT
    ION=640x360,FRAME-RATE=25.000,CODECS="avc1.4d401e,mp4a.40.2"
         f1.m3u8
         #EXT-X-STREAM-INF:PROGRAM-ID=1,BANDWIDTH=263862,RESOLUT
    ION=256x144,FRAME-RATE=15.000,CODECS="avc1.4d40t5,mp4a.40.2"
         f2.m3u8
         #EXT-X-STREAM-INF:PROGRAM-ID=1,BANDWIDTH=1063385,RESOLU
    TION=720x404,FRAME-RATE=25.000,CODECS="avc1.4d401e,mp4a.40.2"
         f3.m3u8
```

Based on the foregoing, step S102 above may be implemented through following steps S1021-S1023.

In step S1021, focus values of respective video slices in the second video frame are searched for according to the index information.

It has been described above that the index information includes the focus values of the respective video slices in respective video frames in the target video. Therefore, according to a tile identifier of each of the video slices in the second video frame, a focus value corresponding to a tile identifier that is identical to the tile identifier may be searched for in the index information. Here, the index information may be in the form of a table, or may be in the form of textual expression, or the like. The embodiments of the present application are not limited to this.

In step S1022, definitions of the respective video slices in the second video frame are determined according to the focus values.

In an embodiment, the focus values may be divided into three levels, for example, a first level, a second level and a third level, each level corresponding to a focus value range, and each level corresponding to a definition. When performing step S1012, the focus values may be matched with the three example levels. If a focus value falls within a focus value range corresponding to the first level, the definition corresponding to the focus value is a definition corresponding to the first level.

In step S1023, download addresses of the respective video slices corresponding to the definitions are searched for according to definitions of the respective video slices in the second video frame.

In an embodiment, a maximum focus value among the focus values of the respective video slices may be determined first, and a definition of a video slice corresponding to the maximum focus value is determined as the highest definition. Then, definitions of other video slices are determined according to positional relationship between other video slices and the video slice corresponding to the maximum focus value. Based on this, step S1022 may be replaced with following steps A to F.

In step A, according to a maximum focus value in the index information, a first target video slice corresponding to the maximum focus value is determined from respective video frames.

A target video frame includes a plurality of video slices, each corresponding to a focus value. Therefore, the maximum focus value may be selected from a plurality of focus values. In an embodiment, a video slice corresponding to the maximum focus value is determined, from the index information, as the first target video slice.

In step B, a definition of the first target video slice is determined as a definition of the highest level.

It has been described above that the first target video slice is a video slice corresponding to the maximum focus value, and therefore the first target video slice is characterized as a video slice where visual centers of most users are located. In an embodiment, it is necessary to determine the definition of the first target video slice as the definition of the highest level.

In step C, second target video slices in a decentralized neighborhood of the first target video slice are determined.

In an embodiment, the above second target video slices are video slices within a range, which is with the first target video slice as a center and with predetermined number of video slice as a radius. It should be noted that the term "decentralized" means that the first target video slice is not included in this range.

In step D, a definition of the second target video slices is determined as a definition of the next highest level.

In step E, third target video slices are determined.

In step F, a definition of the third target video slices is determined as a definition of the lowest level.

The second video frame includes the first target video slice, the second target video slices, and the third target video slices. The positional relationship between the above first, second and third target video slices is shown in Fig. 6.

In an embodiment, the above definition of the highest level, definition of the next highest level and definition of the lowest level are merely examples. In practical applications, a plurality of levels of definition may be defined. The present application is not limited to this.

In an example, after step A above is performed, the definition of the video slices, other than the first target video slice, in the second video frame may be directly determined as a definition of a preset level lower than the definition of the highest level.

In step S103, the second video frame is downloaded at a first time according to the download address obtained in step S102.

The first time is a preset time within the current time period.

Since the second video frame has been downloaded at the first time, the terminal has acquired data of the second video frame when the first time period arrives. Therefore, the embodiments of the present application can effectively alleviate the problem of latency at a relevant terminal when the terminal plays back a video.

In an embodiment, the above preset time may be an intermediate time or 2/3 time corresponding to the current time period. The present application is not limited to this.

In step S104, the second video frame is played back at the start time of the first time period.

As shown in Fig. 7, it is assumed that D1 is the current time period and the current playback time is T1. When the current playback time is T2, the second video frame is downloaded, and T2 is the first time. When the current time is T3, part of the second video frame has been cached, and therefore when the time T3 arrives, the second video frame may be played back directly.

In theory, the second video frame played back at the start time of the first time period is the best video frame, namely, the video slice where the users' actual visual centers are located should be the video slice of the highest definition in the second video frame. In fact, since the second video frame downloaded in advance is not obtained according to actual focus values at the start time of the first time period, the second video frame downloaded in advance is not necessarily the best video frame. In order to ensure that the second video frame played back at the start time of the first time period is the best video frame, it is necessary to detect, at the start time of the first time period, a video slice corresponding to an actual maximum focus value.

Based on the foregoing, before step S104, following steps A1-E1 are further included.

In step A1, a fourth target video slice corresponding to an actual maximum focus value is detected at the start time of the first time period.

In an embodiment, the above actual maximum focus value refers to a focus value of a detected video slice corresponding to the users' visual centers at the start time of the first time period. It should be noted that this detection method belongs to related technologies and will not be described herein again.

In step B1, if the fourth target video slice does not match with the first target video slice, a definition of the fourth target video slice is determined as a definition of the highest level.

When the fourth target video slice does not match with the first target video slice, the second video frame is not the best video frame. Therefore, it is necessary to adjust the second video frame to the best video frame, namely, it is necessary to determine the definition of the fourth target video slice in the second video frame as the definition of the highest level.

In step C1, a download address of the fourth target video slice corresponding to the definition of the highest level is determined according to the index information.

In step D1, the fourth target video slice is downloaded.

In step E1, the fourth target video slice is played back.

When the fourth target video slice has been downloaded, the fourth target video slice is played back. Of course, when 50% of the fourth target video slice has been downloaded, part of the fourth target video slice may be played back.

It can be understood that the download of the second video frame corresponding to the first time period has already started at the first time. When the start time of the first time period arrives, the terminal has already acquired the second video frame, so that the terminal no longer needs to download the second video frame from the server, namely, the problem of latency no longer exists at the terminal when the terminal plays back a video, and thus intelligence of the terminal is improved.

In an embodiment, the following program is a program when a target video of a certain time period is played back:

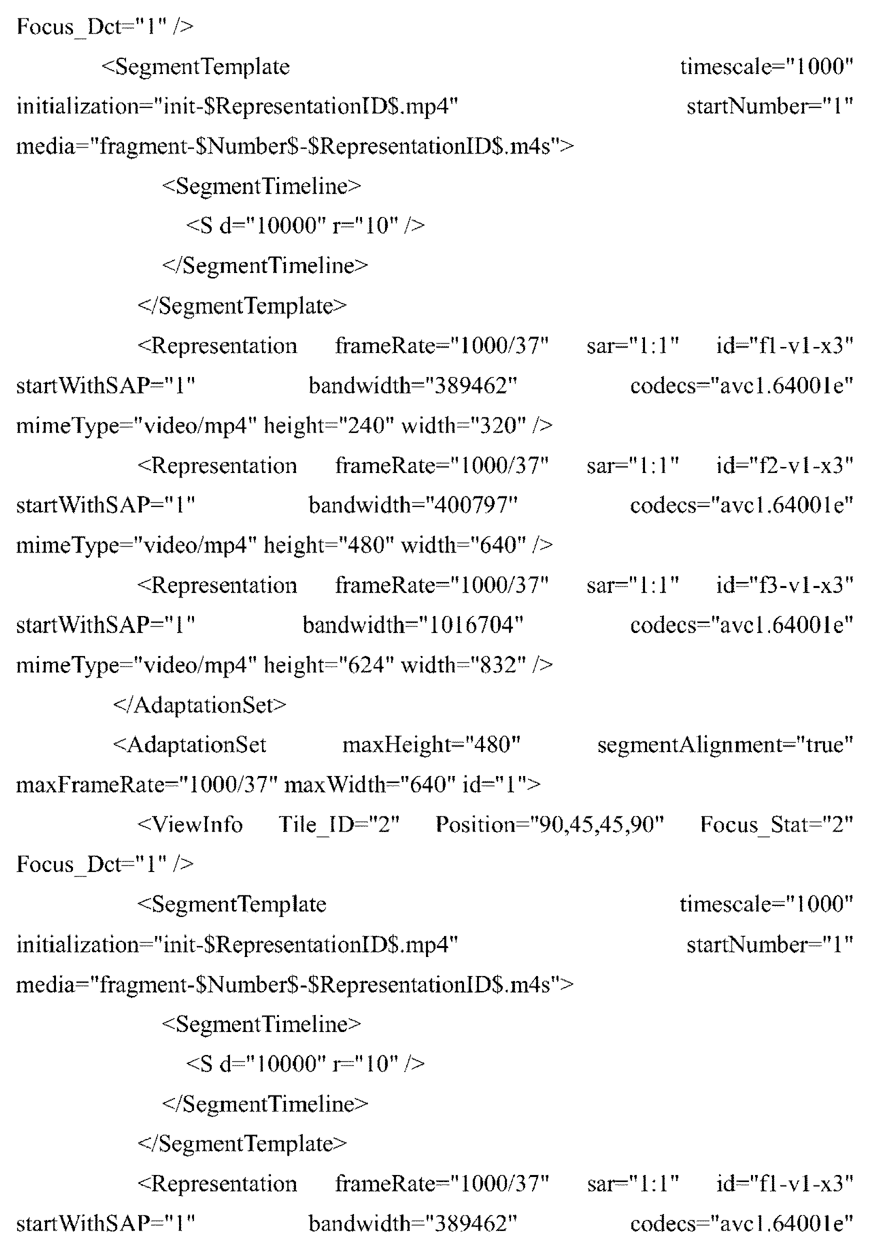

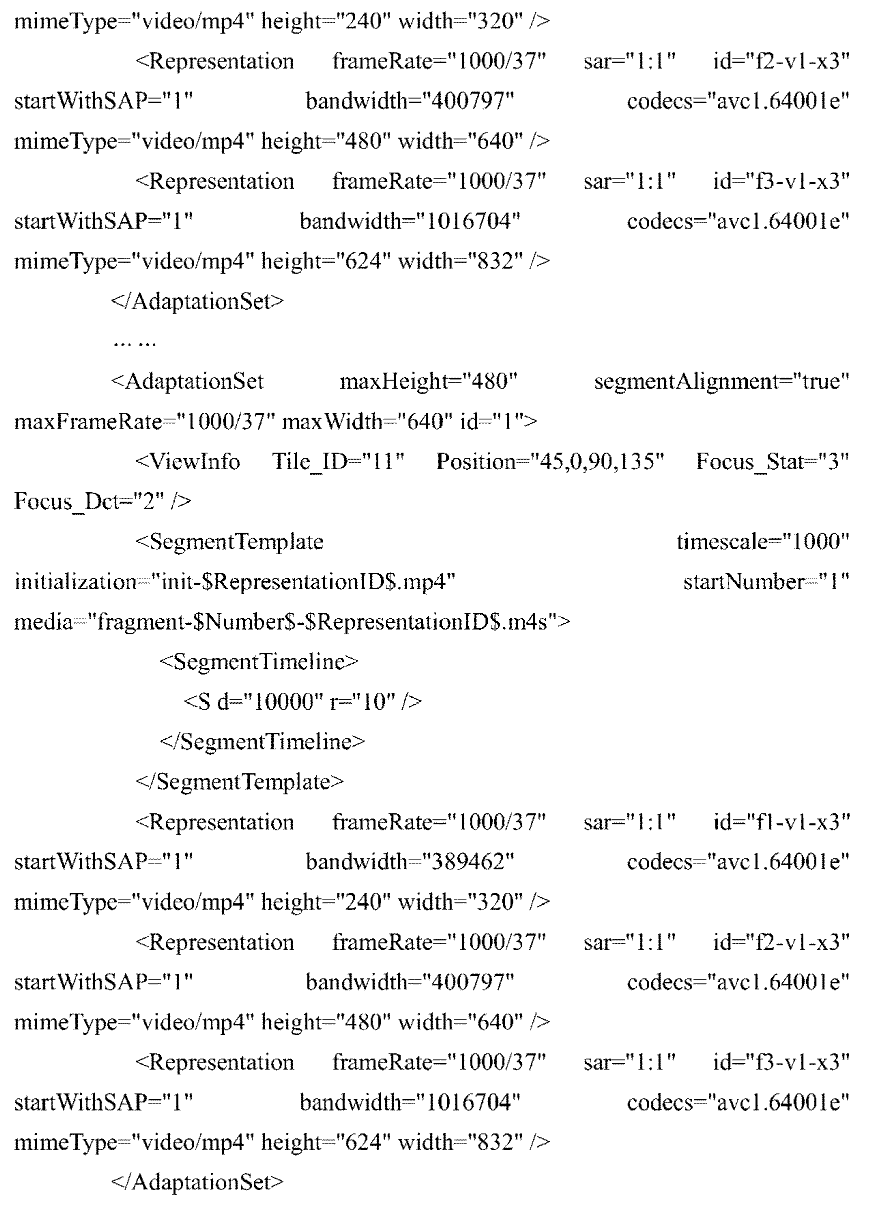

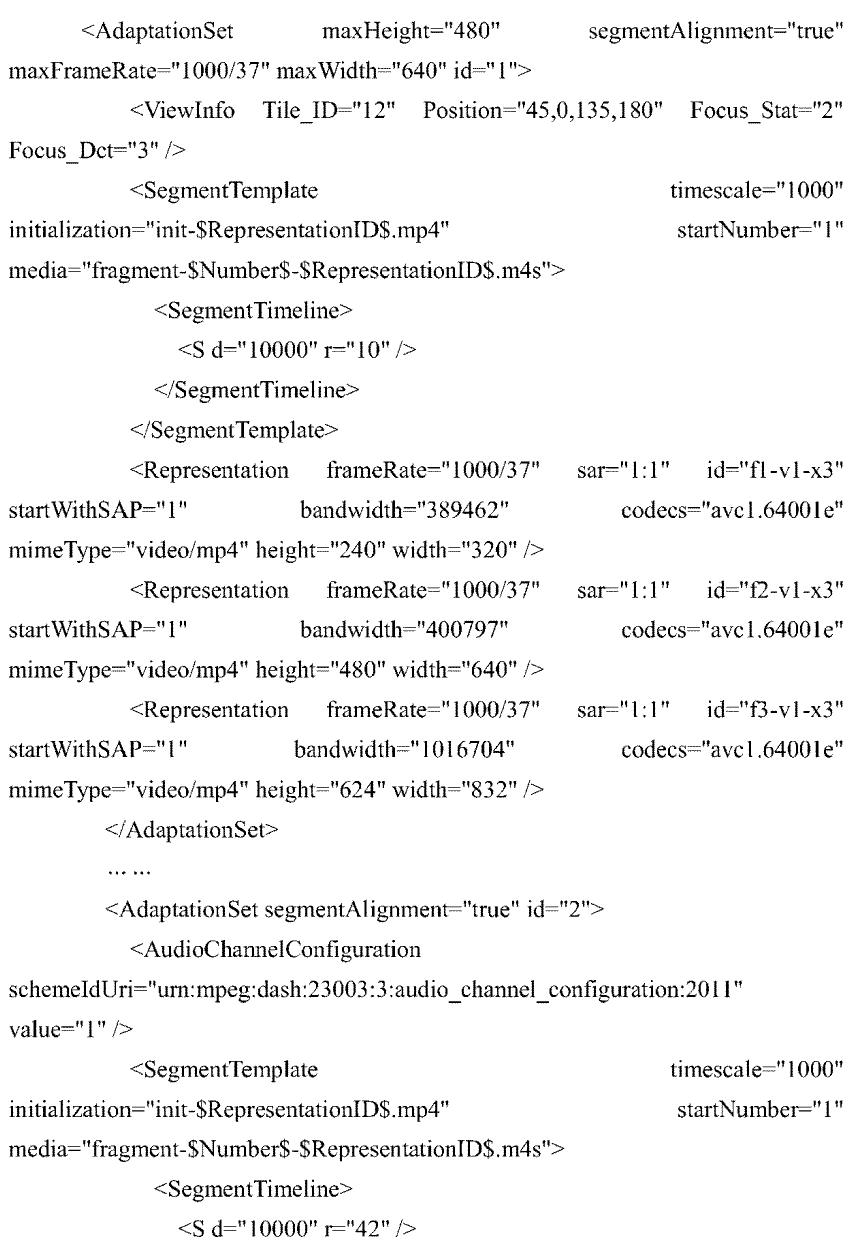

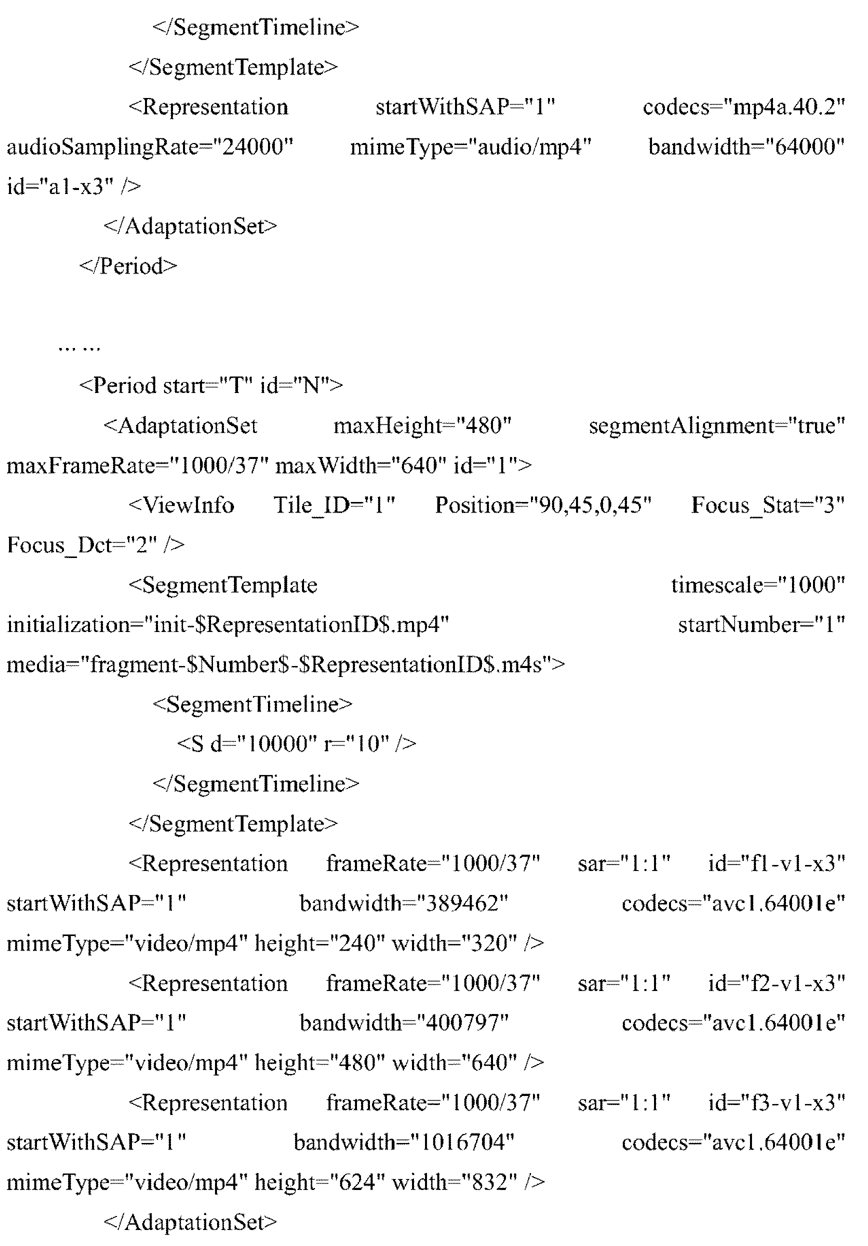

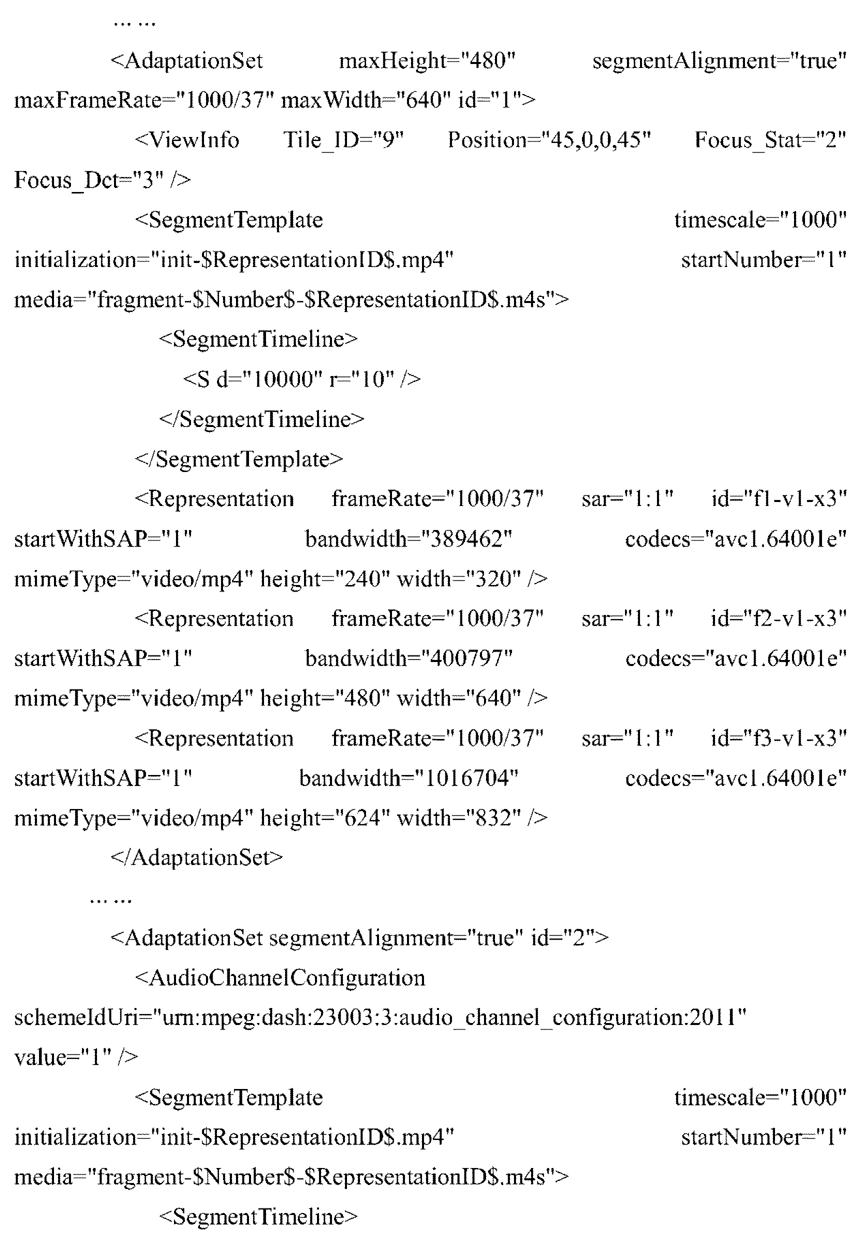

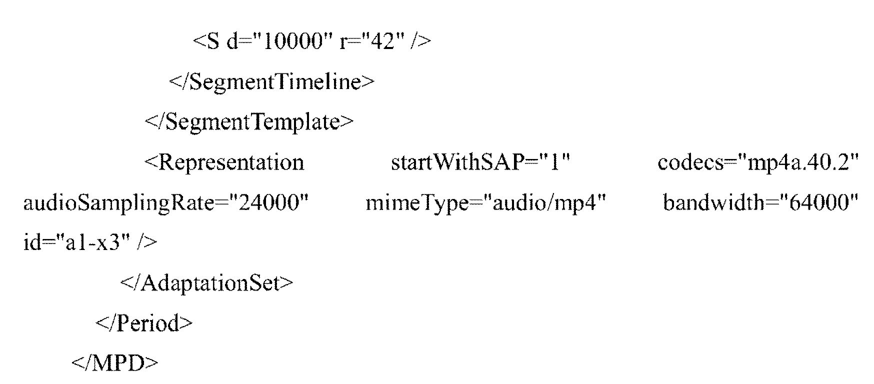

An embodiment of the present application provides a video playback method, a terminal, a server, and a storage medium. The server acquires focal point description information of a target video, encapsulates the focal point description information into index information of the target video, and sends the index information to the terminal. When playing back the target video, the terminal receives the index information that is sent by the server and that corresponds to the target video; when playing back a first video frame of the current time period, the terminal determines, according to the index information, a download address of a second video frame that matches with a first time period, wherein the first video frame and the second video frame are video frames in the target video, and the first time period is a next time period of the current time period; the terminal downloads the second video frame at a first time according to the download address, wherein the first time is a preset time within the current time period; and the terminal plays back the second video frame at the start time of the first time period. With the above technical solutions, the terminal can download the second video frame of the first time period in advance during the current time period. The second video frame can be directly played back at the start time of the first time period, and it is not necessary to download the second video frame at the start time of the first time period. Therefore, the technical solutions provided by the present application can effectively reduce latency at a terminal when the terminal plays back a video, thereby further improving intelligence of the video playback function of the terminal.

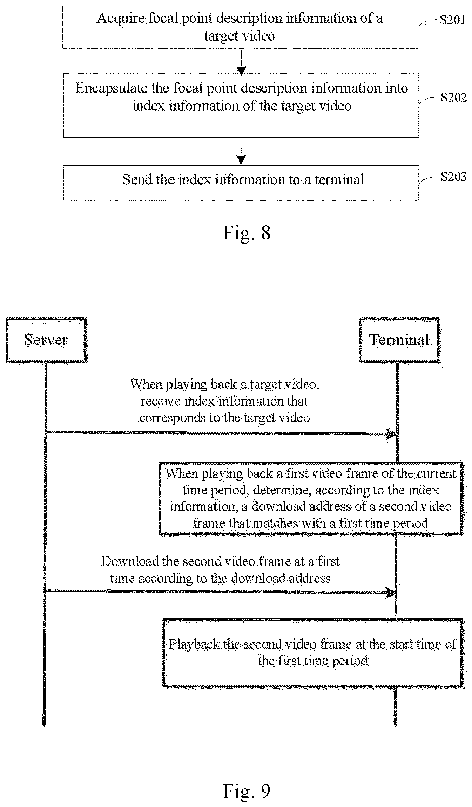

An embodiment of the present application provides a video playback method, which is applied to a server. As shown in Fig. 8, the method may include step S201, step S202, and step S203.

In step S201, focal point description information of a target video is acquired.

In an embodiment, the above focal point description information characterizes focus information of respective video slices of respective video frames among the target video frames (for example, distances between the users' visual centers and the respective video slices).

In an embodiment, step S201 above may be acquired in the following first and second ways.

In the first way, preset focal point description information of the target video is acquired.

In an embodiment, the above preset focal point description information is information related to focuses (for example, definitions or focus values) preset in advance according to user habits. For example, definitions corresponding to respective video slices of the second video frame are set; focus values corresponding to the respective video slices of the second video frame are set; or download addresses corresponding to the respective video slices of the second video frame are set.

In the second may, statistical analysis is performed on focus values of the target video in a first preset time period, and the focus values are used as focal point description information.

In an embodiment, the above second way may be implemented through following step a and step b.

In step a, statistical analyses are performed with respect to download counts corresponding to respective video slices corresponding a second time within the first preset time period until finishing all of the statistical analyses within the first preset time period.

The second time is any time within the first preset time period.

In an embodiment, the above first preset time period refers to a configurable time period in the duration corresponding to the target video. For example, the duration of the target video is 100 min, and the first preset time period is 80 min within the target video. Of course, the first preset time period 80 min may also be adjusted to 70 min according to actual needs.

In an embodiment, the above statistical data are historical playback data of the target video, such as playback data for the first to third days of a movie (including download information of respective video slices in respective video frames).

In step b, focus values corresponding to the respective video slices are determined according to the download counts.

Each video slice in each video frame corresponds to a download count. The download count may reflect the probability that the users' visual centers corresponding to a video slice falls on that video slice. When visual centers of most users fall on one of the video slices, it means that a focus value corresponding to that video slice is relatively large. Therefore, focus values of the respective video slices may be determined according to the download counts of the respective video slices.

In an embodiment, step b above may be implemented through following steps a1 to d1.

In step a1, a final video slice whose download ratio reaches a preset download ratio is determined according to the download count.

Each video slice in each video frame corresponds to a download count, and therefore download ratios of respective video slices in a video may be calculated. When a download ratio is greater than a preset download ratio, for example, greater than 80%, it means that a video slice corresponding to that download ratio has been downloaded by 80% terminals, and the video slice corresponding to that download ratio is called the final video slice.

In step b1, a focus value corresponding to the final video slice is set as a maximum value.

From step a1 above, the final video slice has been downloaded by most terminals, for example, the final video slice has been downloaded by 80% terminals, and this means that the final video slice is the video slice corresponding to the visual centers of most users. Therefore, it is necessary to set the focus value corresponding to the final video slice as the maximum value.

In step c1, the remaining video slices, other than the final video, among the respective video slices are arranged according to their respective download count to obtain the sorted remaining video slices.

The download counts are arranged in ascending order. Of course, the download counts corresponding to the respective video slices may be arranged in sequence according to the order of arrangement of the respective video slices. It should be noted that the order of arrangement of the download counts is not limited in the present application.

In step d1, focus values of the sorted remaining video slices are set in sequence.

When the download counts are arranged in ascending order, the focus values of the sorted remaining video slices set in sequence are also arranged in ascending order. When the download counts corresponding to the respective videos slices are arranged in sequence according to the order of arrangement of the respective video slices, a magnitude relationship between the focus values of two adjacent sorted remaining video slices is the same as a magnitude relationship between the corresponding download counts of those two adjacent sorted remaining video slices.

In step S202, the focal point description information is encapsulated into index information of the target video.

The focal point description information obtained in step S201 is encapsulated using the HLS protocol or the DASH protocol. In an embodiment, the focal point description information is added to the EXT-X-VIEW-INF attribute field of the HLS protocol. Alternatively, the focal point description information is added to the ViewInfo attribute field of the HASH protocol. Of course, other encapsulating forms may also be used to encapsulate the focal point description information, and the present application is not limited to this.

In step S203, the index information is sent to the terminal.

In an embodiment, the above index information may be updated according to the latest statistical data. The specific updating way is the same as the second way above.

It can be understood that the index information generated by the server includes the focal point description information of the respective video slices in the respective video frames in the target video, and the focal point description information may represent situations of video slices downloaded by the terminal, for example, definition information corresponding to the respective video slices when they are being downloaded. That is to say, according to the index information, it is possible to predict the situation of the video slice when the terminal downloads a video slice.

In this way, the terminal may predict the download situation of a video slice according to the index information, and download the relevant video slice in advance.

In an embodiment, as shown in Fig. 9, a server acquires focal point description information of a target video, encapsulates the focal point description information into index information of the target video, and sends the index information to the terminal when a terminal plays back the target video. The terminal receives the index information sent by the server; when playing back a first video frame of the current time period, the terminal determines, according to the index information, a download address of a second video frame that matches with a first time period; the terminal downloads, according to the download address, the second video frame from the server at a first time; and the terminal plays back the second video frame at a start time of the first time period.

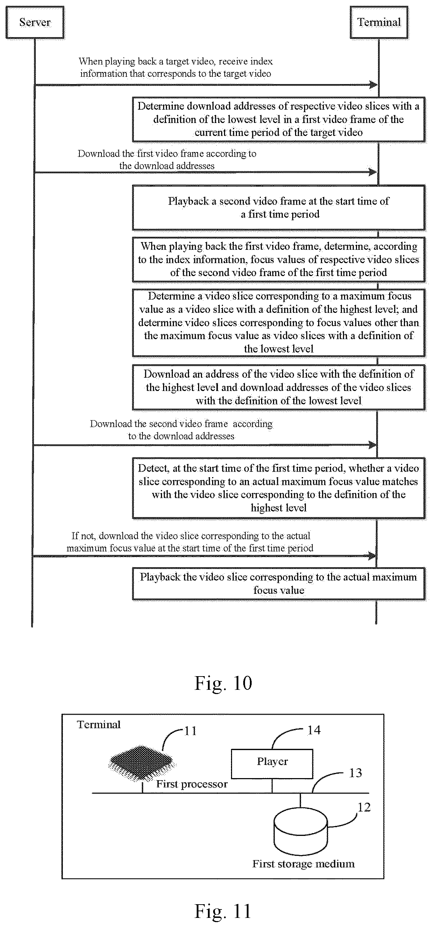

In an embodiment, as shown in Fig. 10, when playing back a target video, a terminal receives index information that is sent by a server and corresponds to the target video; the terminal determines, according to the index information, download addresses of all video slices with a definition of the lowest level in a first video frame of the current time period of the target video; the terminal downloads the first video frame from the server according to the download addresses; when playing back the first video frame, the terminal determines focus values of respective video slices of a second video frame of a first time period according to the index information; the terminal determines a video slice corresponding to a maximum focus value as a video slice with a definition of the highest level; the terminal determines video slices corresponding to focus values other than the maximum focus value as video slices with a definition of the lowest level; the terminal determines a download address of the video slice with the definition of the highest level and download addresses of the video slices with the definition of the lowest level; the terminal downloads the second video frame according to the download addresses; the terminal detects, at the start time of the first time period, whether a video slice corresponding to an actual maximum focus value matches with the video slice corresponding to the definition of the highest level; if not, the terminal downloads a video slice corresponding to the actual maximum focus value at the start time of the first time period; and the terminal plays back the video slice corresponding to the actual maximum focus value.

### Embodiment two

As shown in Fig. 11, an embodiment of the present application provides a terminal. The terminal includes a first processor 11, a first storage medium 12, a first communication bus 13, and a player 14. The first processor 11, the first storage medium 12, and the player 14 are connected through the first communication bus 13.

The first processor 11 is configured to call a video playback-related program stored in the first storage medium 12 and perform following steps: when playing backs a target video, receiving index information that is sent by a server and that corresponds to the target video; when playing back a first video frame of the current time period, determining, according to the index information, a download address of a second video frame that matches with a first time period, wherein the first video frame and the second video frame are video frames in the target video, and the first time period is a next time period of the current time period; and downloading the second video frame at a first time according to the download address, wherein the first time is a preset time within the current time period.

The player 14 is configured to play back the second video frame at the start time of the first time period.

In an embodiment, the first processor 11 is configured to search for focus values of respective video slices in the second video frame according to the index information, to determine definitions of the respective video slices in the second video frame according to the focus values, and to search, according to the definitions, for download addresses of the respective video slices corresponding to the definitions.

In an embodiment, the first processor 11 is configured: to determine a first target video slice corresponding the maximum focus value according to a maximum focus value among the focus values of the respective video slices in the second video frame; to determine a definition of the first target video slice as a definition of the highest level; to determine second target video slices in a decentralized neighborhood of the first target video slice; to determine a definition of the second target video slices as a definition of the next highest level; to determine third target video slices; and to determine a definition of the third target video slices as a definition of the lowest level.

The second video frame includes the first target video slice, the second target video slices, and the third target video slices.

In an embodiment, the first processor 11 is further configured: to detect, at the start time of the first time period, a fourth target video slice corresponding to an actual maximum focus value; to determine a definition of the fourth target video slice as a definition of the highest level if the fourth target video slice does not match with the first target video slice; to determine, according to the index information, a download address of the fourth target video slice corresponding to the definition of the highest level; and to download the fourth target video slice. The player 14 is further configured to playback the fourth target video slice.

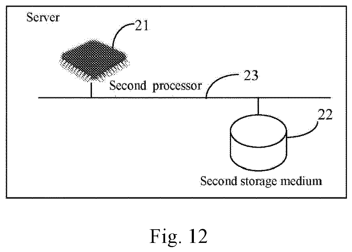

As shown in Fig. 12, an embodiment of the present application provides a server. The server includes a second processor 21, and a second storage medium 22 having stored thereon instructions executable by the second processor 21. The second storage medium 22 depends on the second processor 21 to perform operations through a second communication bus 23. The instructions, when executed by the second processor 22, perform following steps: acquiring focal point description information of a target video; encapsulating the focal point description information into index information of the target video; and sending the index information to a terminal.

In an embodiment, the second processor 21 is configured to acquire preset focal point description information of the target video.

In an embodiment, the second processor 21 is configured to perform statistical analysis with respect to focus values corresponding to the target video in a first preset time period, and to use the focus values as the focal point description information.

In an embodiment, the second processor 21 is configured: to perform statistical analyses with respect to download counts corresponding to respective video slices corresponding to a second time within the first preset time period, until finishing all statistical analyses within the first preset time period, wherein the second time is any time within the first preset time period; and to determine focus values of the respective video slices according to the download counts.

In an embodiment, the second processor 21 is configured: to determine, according to the download count, a final video slice whose download ratio reaches a preset download ratio; to set a focus value corresponding to the final video as a maximum value; to arrange the remaining video slices, other than the final video, among the respective video slices according to their respective download counts to obtain the sorted remaining video slices; and to set focus values of the sorted remaining video slices in sequence.

In practical applications, the above memory may be a volatile memory such as a random-access memory (RAM), a non-volatile memory such as a read-only memory (ROM), a flash memory, a hard disk (HDD) and a solid-state drive (SSD), or a combination of the above types of memory, and provides instructions and data to the processor.

The above processor may be at least one of an application specific integrated circuit (ASIC), a digital signal processor (DSP), a digital signal processing device (DSPD), a programmable logic device (PLD), a field programmable gate array (FPGA), a central processing unit (CPU), a controller, a microcontroller, and a microprocessor. Understandably, for different apparatuses, there may be other electronic devices for implementing the above processor functions, and the embodiments of the present application are not specifically limited to this.

An embodiment of the present application provides a computer storage medium, which is applied to a terminal. The computer storage medium has one or more video playback-related programs stored thereon. The one or more video playback-related programs may be executed by one or more first processors to implement the virtual-reality video playback method applied to a terminal in Embodiment one.

An embodiment of the present application provides a computer storage medium, which is applied to a server. The computer storage medium has one or more video playback-related programs stored thereon. The one or more video playback-related programs may be executed by one or more second processors to implement the virtual-reality video playback method applied to a server in Embodiment one.

Those skilled in the art should understand that the embodiments of the present application may be provided as methods or computer program products. Therefore, the present application may take the form of a hardware embodiment, a software embodiment, or an embodiment combining software and hardware. Moreover, the present application may take the form of a computer program product implemented on one or more computer usable storage media (including but not limited to disk storage, optical storage, etc.) including computer usable program code.

The present application is described with reference to flowcharts and/or block diagrams of methods, devices (systems), and computer program products according to the embodiments of the present application. It should be understood that at least one of flows and/or blocks in the flowcharts and/or block diagrams and a combination of the flows and/or blocks in the flowcharts and/or block diagrams may be implemented by computer program instructions. These computer program instructions may be provided to a processor of a general-purpose computer, special-purpose computer, embedded processor or other programmable data processing devices to produce a machine, so that the instructions executed by the processor of the computer or other programmable data processing devices generate means for implementing functions specified in one flow or multiple flows of the flowcharts and/or one block or multiple blocks of the block diagrams.

These computer program instructions may also be stored in a computer readable memory that can guide a computer or other programmable data processing device to work in a specific manner, so that the instructions stored in the computer readable memory produce an article of manufacture including an instruction means. The instruction means implements functions specified in one flow or multiple flows of the flowcharts and/or one block or multiple blocks of the block diagrams.

These computer program instructions may also be loaded onto a computer or other programmable data processing devices, so that a series of operating steps are performed on the computer or other programmable devices to generate computer-implemented processing, and the instructions executed on the computer or other programmable devices thus provide steps for implementing functions specified in one flow or multiple flows of the flowcharts and/or one block or multiple blocks of the block diagrams.

## Claims

1. A video playback method, which is applied to a terminal, the method comprising:
when playing back a target video, receiving index information that is sent by a server and corresponds to the target video;
when playing back a first video frame of a current time period, determining, according to the index information, a download address of a second video frame that matches with a first time period, wherein the first video frame and the second video frame are video frames in the target video, and the first time period is a next time period of the current time period;
downloading the second video frame at a first time according to the download address, wherein the first time is a preset time within the current time period; and
playing back the second video frame at a start time of the first time period.

2. The method according to claim 1, wherein determining, according to the index information, a download address of a second video frame that matches with a first time period comprises:
searching for focus values of respective video slices in the second video frame according to the index information;
determining definitions of the respective video slices in the second video frame according to the focus values; and
searching, according to the definitions, for download addresses of the respective video slices corresponding to the definitions.

3. The method according to claim 2, wherein determining definitions of the respective video slices in the second video frame according to the focus values comprises:
determining a first target video slice corresponding to the maximum focus value according to a maximum focus value among the focus values of the respective video slices in the second video frame;
determining a definition of the first target video slice as a definition of the highest level;
determining second target video slices in a decentralized neighborhood of the first target video slice;
determining a definition of the second target video slices as a definition of the second highest level;
determining third target video slices; and
determining a definition of the third target video slices as a definition of the lowest level;
wherein the second video frame includes the first target video slice, the second target video slices, and the third target video slices.

4. The method according to claim 3, before playing back the second video frame at the start time of the first time period, further comprising:
detecting, at the start time of the first time period, a fourth target video slice corresponding to an actual maximum focus value;
if the fourth target video slice does not match with the first target video slice, determining a definition of the fourth target video slice as the definition of the highest level;
determining, according to the index information, a download address of the fourth target video slice corresponding to the definition of the highest level;
downloading the fourth target video slice; and
playing back the fourth target video slice.

5. A video playback method, which is applied to a server, the method comprising:
acquiring focal point description information of a target video;
encapsulating the focal point description information into index information of the target video; and
sending the index information to a terminal.

6. The method according to claim 5, wherein acquiring focal point description information of a target video comprises:
acquiring preset focal point description information of the target video.

7. The method according to claim 5, wherein acquiring focal point description information of a target video comprises:
performing statistical analyses with respect to focus values corresponding to the target video in a first preset time period; and
using the focus values as the focal point description information.

8. The method according to claim 7, wherein performing statistical analyses with respect to the focus values corresponding to the target video in the first preset time period comprises:
performing statistical analyses with respect to download counts corresponding to respective video slices corresponding to a first time within the first preset time period until finishing all of the statistical analyses within the first preset time period, wherein the first time is any time within the first preset time period; and
determining, according to the download counts, focus values corresponding to the respective video slices.

9. The method according to claim 8, wherein determining, according to the download counts, focus values corresponding to the respective video slices comprises:
determining, according to a download count, a final video slice whose download ratio reaches a preset download ratio;
setting a focus value corresponding to the final video slice as a maximum value;
arranging remaining video slices, other than the final video slice, among the respective video slices according to their respective download counts to obtain the sorted remaining video slices; and
setting focus values of the sorted remaining video slices in sequence.

10. A terminal, comprising: a processor, a storage medium, a communication bus, and a player, wherein the processor, the storage medium, and the player are connected through the communication bus,
wherein the processor is configured to call a video playback-related program stored in the storage medium and perform following steps:
when playing back a target video, receiving index information that is sent by a server and corresponds to the target video;
when playing back a first video frame of a current time period, determining, according to the index information, a download address of a second video frame that matches with a first time period, wherein the first video frame and the second video frame are video frames in the target video, and the first time period is a next time period of the current time period; and
downloading the second video frame at a first time according to the download address, wherein the first time is a preset time within the current time period; and
wherein the player is configured to play back the second video frame at a start time of the first time period.

11. A server, comprising:
a processor, and a storage medium storing instructions executable by the processor, wherein the storage medium depends on the processor to perform operations through a communication bus, and the instructions, when executed by the processor, perform following operations:
acquiring focal point description information of a target video;
encapsulating the focal point description information into index information of the target video; and
sending the index information to the terminal.

12. A computer storage medium, which is applied to a terminal, the computer storage medium having stored thereon at least one video playback-related program, the at least one video playback-related program being executable by at least one first processor to implement the method according to claims 1-4.

13. A computer storage medium, which is applied to a server, the computer storage medium having stored thereon at least one video playback-related program, the at least one video playback-related program being executable by at least one second processor to implement the method according to claims 5-9.
